# EUROPÄISCHE PATENTSCHRIFT

(11) **EP 3 619 090 B1**
(45) Veröffentlichungstag und Bekanntmachung des Hinweises auf die Patenterteilung: **05.01.2022**
(21) Anmeldenummer: 18730276.5
(22) Anmeldetag: 30.05.2018
(51) Int. Cl.: B61L 15/00, B61L 3/00, B60L 3/00, B60L 7/06, B60L 7/08, B60L 7/14, B60L 7/18, B60L 9/16, B60L 15/20

(54) **VORRICHTUNG UND VERFAHREN ZUR STEUERUNG EINER ANTRIEBSEINRICHTUNG ZUR TRAKTION EINES FAHRZEUGS**
DEVICE AND METHOD FOR CONTROLLING A DRIVE APPARATUS FOR TRACTION OF A VEHICLE
DISPOSITIF ET PROCÉDÉ POUR COMMANDER UN DISPOSITIF D'ENTRAÎNEMENT PERMETTANT LA TRACTION D'UN VÉHICULE

(30) Priorität: 30.06.2017 DE 102017211193
(43) Veröffentlichungstag der Anmeldung: 11.03.2020
(73) Patentinhaber: Siemens Mobility GmbH, 81739 München (DE)
(72) Erfinder: AMLER, Gerald, 90475 Nürnberg (DE)
(74) Vertreter: Deffner, Rolf
(86) Internationale Anmeldenummer: PCT/EP2018/064133
(87) Internationale Veröffentlichungsnummer: WO 2019/001881

(56) Entgegenhaltungen:
- EP-A2- 2 133 254
- EP-A2- 2 559 602
- WO-A1-2016/134964
- DE-A1- 19 933 789

## Beschreibung

Die Erfindung betrifft eine Vorrichtung, welche zur Steuerung einer Antriebseinrichtung zur Traktion eines Fahrzeugs geeignet ausgebildet ist.

Es ist bekannt, dass konventionell bei einem Fahrzeug, insbesondere bei einem Schienenfahrzeug, bei dem elektrische Antriebseinrichtungen ein elektrisches Antriebssystem bilden, welches bei entsprechender Ansteuerung in einem Bremsbetrieb eine Bremswirkung auf das Fahrzeug entfaltet, zusätzlich ein Reibungsbremssystem zum Abbremsen des Fahrzeugs vorgesehen ist. Dabei wird das elektrische Antriebssystem als Teil einer sogenannten Betriebsbremse des Fahrzeugs - also bei einer Betriebsbremsung - betrieblich zum Abbremsen des Fahrzeugs genutzt. Das elektrische Antriebssystem wird jedoch konventionell nicht als Teil einer sogenannten Schnellbremse - also nicht bei einer Schnellbremsung - zum Abbremsen des Fahrzeugs in Gefahrensituationen genutzt, da hinsichtlich der jeweiligen Bremswirkung dem Reibungsbremssystem ein höheres Sicherheitsniveau zugeschrieben wird als dem elektrischen Antriebssystem.

Es ist außerdem bekannt, dass beim Halt eines Fahrzeugs, insbesondere eines Schienenfahrzeugs, gefordert wird, dass dieses sich nicht unbeabsichtigt zu bewegen beginnt und dadurch möglicherweise Passagiere in Gefahr bringt, welche sich gerade im Bereich eines Einstiegs aufhalten. Eine solche Forderung wird konventionell mittels einer sogenannten "Traktionssperre" realisiert.

So ist beispielsweise aus der Druckschrift EP 2 559 602 B1 eine Vorrichtung bekannt, bei welcher aufgrund einer Traktionssperranforderung die Ausgabe der von einer Antriebssteuereinrichtung erzeugten Ansteuersignale an eine Antriebseinrichtung gesperrt wird; bei welcher also die Antriebssteuereinrichtung aufgrund einer Traktionssperranforderung für ein Ansteuern der Antriebseinrichtung gesperrt wird.

Aus der Druckschrift WO 2016/134964 A1 ist ein Fahrzeug mit einer einen oder mehrere elektrische Motoren aufweisenden Antriebseinrichtung und einer mit der Antriebseinrichtung in Verbindung stehenden und diese ansteuernden Antriebssteuereinrichtung bekannt. Bei diesem bekannten Fahrzeug wird die Antriebseinrichtung, welche dort als "Antrieb" bezeichnet ist, von einem Energieversorgungsnetz des Fahrzeugs getrennt, wenn ein Antriebsstrommesswert einen aktiven Antriebsbetrieb der Antriebseinrichtung anzeigt und gleichzeitig ein Schnellbremssignal eine Schnellbremsung anzeigt. Hierzu weist das Fahrzeug zusätzlich zu der Antriebssteuereinrichtung einen elektrischen Schalter und eine mittels eines Steuersignals auf den elektrischen Schalter einwirkende Überwachungseinrichtung auf. Im geschlossenen Zustand verbindet der elektrische Schalter die Antriebseinrichtung mit einem Energieversorgungsanschluss des Energieversorgungsnetzes. Und im geöffneten Zustand trennt der elektrische Schalter die Antriebseinrichtung von dem Energieversorgungsanschluss. Die Überwachungseinrichtung arbeitet dabei unabhängig von der Antriebssteuereinrichtung. Durch ein Öffnen des Schalters wird ein Abschalten der Antriebseinrichtung unabhängig davon erzwungen, ob die Antriebssteuereinrichtung die Antriebseinrichtung weiter aktiv betreiben will oder nicht.

Die Erfindung geht aus von einer Vorrichtung, welche zur Steuerung einer Antriebseinrichtung zur Traktion eines Fahrzeugs geeignet ausgebildet ist und welche eine Antriebssteuereinrichtung sowie eine Überwachungseinrichtung aufweist, wobei die Überwachungseinrichtung jeweils entweder einen Traktionsfreigabe-Steuersignalwert oder einen Traktionssperre-Steuersignalwert bereitstellt (WO 2016/134964 A1).

Der Erfindung liegt die Aufgabe zu Grunde, zum Einsatz der Antriebseinrichtung bei Schnellbremsungen des Fahrzeugs - also zum Einsatz der Antriebseinrichtung als Teil der Schnellbremse des Fahrzeugs - die Vorrichtung derart zu gestalten, dass in einer anderen Weise ein hohes Maß an Sicherheit gewährleistet ist.

Diese Aufgabe wird erfindungsgemäß durch eine Vorrichtung mit den Merkmalen gemäß Patentanspruch 1 gelöst. Vorteilhafte Ausgestaltungen der erfindungsgemäßen Vorrichtung sind in Unteransprüchen angegeben.

Danach ist erfindungsgemäß vorgesehen, dass die Überwachungseinrichtung geeignet ausgebildet ist, der Antriebssteuereinrichtung den Traktionsfreigabe-Steuersignalwert bereitzustellen, unter Einwirkung dessen die Antriebssteuereinrichtung für ein Ansteuern der Antriebseinrichtung freigegeben ist, wenn neben einem Traktionsfreigabe-Anforderungssignalwert aufgrund einer Schnellbremsanforderung und einem weiteren Traktionssperre-Anforderungssignalwert aufgrund einer Traktionssperranforderung auch ein zusätzlicher Traktionsfreigabe-Anforderungssignalwert aufgrund einer Traktionsfreigabebedingung auf die Überwachungseinrichtung einwirkt.

Ein wesentlicher Vorteil der erfindungsgemäßen Vorrichtung ist darin zu sehen, dass bei deren Einsatz zur Steuerung einer Antriebseinrichtung ein sicherer Anteil der Antriebseinrichtung an der Schnellbremse des Fahrzeugs gewährleistet wird. Denn durch die erfindungsgemäße Vorrichtung ist sichergestellt, dass selbst bei Vorliegen der Traktionssperranforderung das Ansteuern der Antriebseinrichtung durch die Antriebssteuereinrichtung zu einer Schnellbremsung freigegeben ist, wenn dies aufgrund der Schnellbremsanforderung erforderlich und aufgrund der Traktionsfreigabebedingung zulässig ist.

Es wird als vorteilhaft angesehen, wenn die Überwachungseinrichtung geeignet ausgebildet ist, der Antriebssteuereinrichtung anstelle des Traktionsfreigabe-Steuersignalwertes den Traktionssperre-Steuersignalwert bereitzustellen, unter Einwirkung dessen die Antriebssteuereinrichtung für das Ansteuern der Antriebseinrichtung gesperrt ist, wenn neben dem Traktionsfreigabe-Anforderungssignalwert aufgrund der Schnellbremsanforderung und dem weiteren Traktionssperre-Anforderungssignalwert aufgrund der Traktionssperranforderung anstelle des zusätzlichen Traktionsfreigabe-Anforderungssignalwertes ein zusätzlicher Traktionssperre-Anforderungssignalwert aufgrund einer Traktionssperrbedingung auf die Überwachungseinrichtung einwirkt.

Dadurch kann ein unzeitiges Antreiben des Fahrzeugs durch die Antriebseinrichtung, beispielsweise zum Zeitpunkt eines Stillstandes an einem Bahnsteig, zu dem durch eine ungewollte Fahrzeugbewegung Personen gefährdet werden könnten, vermieden werden. Es ist also sichergestellt, dass selbst bei Vorliegen der Schnellbremsanforderung das Ansteuern der Antriebseinrichtung durch die Antriebssteuereinrichtung gesperrt ist, wenn dies aufgrund der Traktionssperranforderung und der Traktionssperrbedingung erforderlich ist.

Es wird auch als vorteilhaft angesehen, wenn die Überwachungseinrichtung geeignet ausgebildet ist, den Traktionsfreigabe-Anforderungssignalwert als den Traktionsfreigabe-Steuersignalwert bereitzustellen.

Vorzugsweise ist die Antriebssteuereinrichtung selbst geeignet ausgebildet ist, der Überwachungseinrichtung unter der Einwirkung eines Schnellbrems-Signalwertes, welcher aufgrund der Schnellbremsanforderung an der Antriebssteuereinrichtung anliegt, den Traktionsfreigabe-Anforderungssignalwert bereitzustellen. Dies hat den Vorteil, dass für die Bereitstellung des Traktionsfreigabe-Anforderungssignalwertes keine zusätzliche Komponente erforderlich ist.

Gemäß einer vorteilhaften Ausgestaltung der erfindungsgemäßen Vorrichtung ist vorgesehen, dass die Antriebssteuereinrichtung geeignet ausgebildet ist, der Überwachungseinrichtung anstelle des Traktionsfreigabe-Anforderungssignalwertes einen Traktionssperre-Anforderungssignalwert aufgrund einer Traktionssperre-Testanforderung bereitzustellen, sofern der Schnellbrems-Signalwert nicht anliegt. Dies hat den Vorteil, dass auf einfache Weise getestet werden kann, ob sich die Antriebssteuereinrichtung für das Ansteuern der Antriebseinrichtung sicher sperren lässt.

Um besonders hohen Sicherheitsanforderungen zu genügen, ist es vorteilhaft, wenn die Überwachungseinrichtung als eine Hardwareeinrichtung, insbesondere in Form einer elektrischen Schaltung, ausgebildet ist.

In bevorzugter Ausgestaltung weist die Überwachungseinrichtung einen Steuersignalpfad auf, an dem aufgrund der Schnellbremsanforderung der Traktionsfreigabe-Anforderungssignalwert anliegt und im Zuge dessen eine Schalteinrichtung angeordnet ist, welche zwei parallel geschaltete Schalteinheiten aufweist, wobei der Steuersignalpfad durch die Schalteinrichtung für eine Signalübertragung freigegeben ist, wenn zum Einen die eine Schalteinheit unter der Einwirkung des weiteren Traktionssperre-Anforderungssignalwertes aufgrund der Traktionssperranforderung offen gehalten ist und zum Anderen die andere Schalteinheit unter der Einwirkung des zusätzlichen Traktionsfreigabe-Anforderungssignalwertes aufgrund der Traktionsfreigabebedingung geschlossen gehalten ist.

Weiterhin ist mit Vorteil vorgesehen, dass der Steuersignalpfad durch die Schalteinrichtung für die Signalübertragung gesperrt ist, wenn zum Einen die eine Schalteinheit unter der Einwirkung des weiteren Traktionssperre-Anforderungssignalwertes aufgrund der Traktionssperranforderung offen gehalten ist und zum Anderen die andere Schalteinheit unter der Einwirkung des zusätzlichen Traktionssperre-Anforderungssignalwertes aufgrund der Traktionssperrbedingung offen gehalten ist.

Es wird ferner als vorteilhaft angesehen, wenn die Antriebssteuereinrichtung eine Steuereinheit, eine Ausgabeeinheit, welche einen Kontrollausgang bildet, und eine Ansteuerkontrolleinheit, welche einen Kontrolleingang bildet, aufweist,
- wobei die Steuereinheit geeignet ausgebildet ist, an die Ansteuerkontrolleinheit einen Antriebsansteuerbefehl auszugeben, welchen die Ansteuerkontrolleinheit in ein Antriebsansteuersignal umsetzt,
- wobei die Steuereinheit geeignet ausgebildet ist, unter der Einwirkung eines Schnellbrems-Signalwertes, welcher aufgrund der Schnellbremsanforderung an der Steuereinheit anliegt, an die Ausgabeeinheit eine Anforderung zur Traktionsfreigabe auszugeben, welche die Ausgabeeinheit in den Traktionsfreigabe-Anforderungssignalwert umsetzt und an ihrem Kontrollausgang ausgibt, und
- wobei die Ansteuerkontrolleinheit geeignet ausgebildet ist, die Ausgabe des Antriebsansteuersignals freizugeben, wenn an ihren Kontrolleingang der Traktionsfreigabe-Steuersignalwert anliegt, und die Ausgabe des Antriebsansteuersignals zu sperren, wenn an ihren Kontrolleingang anstelle des Traktionsfreigabe-Steuersignalwertes der Traktionssperre-Steuersignalwert anliegt.

Die Erfindung betrifft auch ein Fahrzeug, insbesondere Schienenfahrzeug, mit zumindest einer Antriebseinrichtung zur Traktion des Fahrzeugs, wobei das Fahrzeug zur Steuerung der zumindest einen Antriebseinrichtung eine erfindungsgemäße Vorrichtung aufweist

Dabei wird es als vorteilhaft angesehen, wenn das Fahrzeug eine hartverdrahtete Sicherheitsschleife aufweist, welche geeignet ausgebildet ist, der Überwachungseinrichtung den weiteren Traktionssperre-Anforderungssignalwert bereitzustellen, wenn sie aufgrund der Traktionssperranforderung unterbrochen ist, und anstelle des weiteren Traktionssperre-Anforderungssignalwertes einen weiteren Traktionsfreigabe-Anforderungssignalwert bereitzustellen, wenn sie geschlossen ist.

Außerdem wird es als vorteilhaft angesehen, wenn das Fahrzeug eine Geschwindigkeitserfassungseinrichtung aufweist, welche geeignet ausgebildet ist, den zusätzliche Traktionsfreigabe-Anforderungssignalwert bereitzustellen, wenn zumindest ein erfasster Geschwindigkeitswert oder ein aus zumindest einem der erfassten Geschwindigkeitswerte abgeleiteter Geschwindigkeitswert des Fahrzeuges größer als ein vorgegebener Mindestgeschwindigkeitswert ist, und anstelle des zusätzlichen Traktionsfreigabe-Anforderungssignalwertes den zusätzlichen Traktionssperre-Anforderungssignalwert bereitzustellen, wenn jeder der erfassten Geschwindigkeitswerte beziehungsweise der abgeleitete Geschwindigkeitswert des Fahrzeugs kleiner als oder gleich dem vorgegebenen Mindestgeschwindigkeitswert ist.

Darüber hinaus wird es als vorteilhaft angesehen, wenn das Fahrzeug eine Sensoreinrichtung aufweist, wobei die Sensoreinrichtung oder die Geschwindigkeitserfassungseinrichtung geeignet ausgebildet ist, den zumindest einen Geschwindigkeitswert anhand von Messsignalen zu bilden, welche von der Sensoreinrichtung an einem mit der Antriebseinrichtung versehenen Drehgestell detektiert werden.

Die Erfindung betrifft auch ein Verfahren zur Steuerung einer Antriebseinrichtung zur Traktion eines Fahrzeugs, bei dem eine Überwachungseinrichtung jeweils entweder einen Traktionsfreigabe-Steuersignalwert oder einen Traktionssperre-Steuersignalwert bereitstellt.

Erfindungsgemäß ist bezüglich eines solchen Verfahrens vorgesehen, dass die Überwachungseinrichtung einer Antriebssteuereinrichtung den Traktionsfreigabe-Steuersignalwert bereitstellt, unter Einwirkung dessen die Antriebssteuereinrichtung für ein Ansteuern der Antriebseinrichtung freigegeben ist, wenn neben einem Traktionsfreigabe-Anforderungssignalwert aufgrund einer Schnellbremsanforderung und einem weiteren Traktionssperre-Anforderungssignalwert aufgrund einer Traktionssperranforderung auch ein zusätzlicher Traktionsfreigabe-Anforderungssignalwert aufgrund einer Traktionsfreigabebedingung auf die Überwachungseinrichtung einwirkt.

Bezüglich der Vorteile des erfindungsgemäßen Verfahrens sei auf die obigen Ausführungen im Zusammenhang mit der erfindungsgemäßen Vorrichtung verwiesen, da die Vorteile des erfindungsgemäßen Verfahrens denen der erfindungsgemäßen Vorrichtung im Wesentlichen entsprechen.

In Analogie zu der erfindungsgemäßen Vorrichtung wird es bei dem erfindungsgemäßen Verfahren als vorteilhaft angesehen, wenn die Überwachungseinrichtung der Antriebssteuereinrichtung anstelle des Traktionsfreigabe-Steuersignalwertes den Traktionssperre-Steuersignalwert bereitstellt, unter Einwirkung dessen die Antriebssteuereinrichtung für das Ansteuern der Antriebseinrichtung gesperrt ist, wenn neben dem Traktionsfreigabe-Anforderungssignalwert aufgrund der Schnellbremsanforderung und dem weiteren Traktionssperre-Anforderungssignalwert aufgrund der Traktionssperranforderung anstelle des zusätzlichen Traktionsfreigabe-Anforderungssignalwertes ein zusätzlicher Traktionssperre-Anforderungssignalwert aufgrund einer Traktionssperrbedingung auf die Überwachungseinrichtung einwirkt.

Die Erfindung wird nachfolgend anhand eines Ausführungsbeispiels näher erläutert; dabei zeigen
- Figur 1: ein erfindungsgemäßes Fahrzeug in Form eines Schienenfahrzeugs mit Antriebseinrichtungen zur Traktion des Fahrzeugs, bei dem jeder der Antriebseinrichtungen eine erfindungsgemäße Vorrichtung zur Steuerung zugeordnet ist, und
- Figur 2: eine der Antriebseinrichtungen aus der Figur 1 mit der ihr zugeordneten erfindungsgemäßen Vorrichtung zur Steuerung.

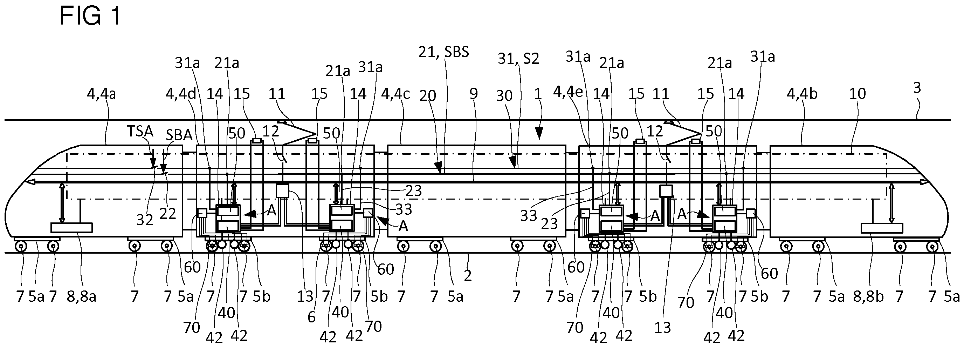

Die Figur 1 zeigt ein erfindungsgemäßes Fahrzeug 1 in Form eines Schienenfahrzeugs auf einer Strecke 2, die mit einer Oberleitung 3 einer Bahnnetzversorgung versehen ist.

Das Schienenfahrzeug weist beispielhaft mehrere Wagen 4 auf, von denen zwei Endwagen 4a, 4b und drei Mittelwagen 4c, 4d, 4e bilden.

Das Schienenfahrzeug weist weiterhin eine zentrale Zugsteuereinrichtung 8 mit zwei redundanten Zugsteuergeräten 8a, 8b auf. Außerdem weist das Schienenfahrzeug eine Datenaustauscheinrichtung 9 und eine als Ganzes mit 10 bezeichnete Energieversorgungseinrichtung auf. Die Datenaustauscheinrichtung 9 erstreckt sich über alle Wagen 4 und kann beispielsweise als Zugbus oder Ethernet ausgebildet sein. Von der Energieversorgungseinrichtung 10 sind in der Figur 1 im Detail insbesondere Stromabnehmer 11, Hauptleistungsschalter 12, Transformatoren 13, Stromrichtercontainer 14 und Bremswiderstände 15 gezeigt.

Das Schienenfahrzeug 1 weist auch eine als Ganzes mit 20 bezeichnete Einrichtung zur Anforderung einer Schnellbremsung und eine als Ganzes mit 30 bezeichnete weitere Einrichtung zur Anforderung einer Traktionssperre auf.

Aufgrund der Sicherheitsanforderungen an die Schnellbremsung und die Traktionssperre werden Schnellbremsanforderungen und Traktionssperranforderungen jeweils mittels mehrerer Quellen aktiviert und vorzugsweise zur drähtigen und mehrkanaligen Übertragung in entsprechende Anforderungssignalwerte umgesetzt.

Die Figuren zeigen von den beiden Einrichtungen 20 und 30 jeweils eine hartverdrahtete Sicherheitsschleife 21 bzw. 31.

Im Zuge der einen hartverdrahteten Sicherheitsschleife 21 ist zumindest ein Kontakt 22 angeordnet, der unter Einwirkung einer Schnellbremsanforderung SBA geöffnet wird. An Anschlusspunkten 21a der hartverdrahteten Sicherheitsschleife 21 zweigen zu den Stromrichtercontainern 14 geführte elektrische Steuerleitungen 23 ab, von denen hier der Übersichtlichkeit halber jeweils nur einige bezeichnet sind.

Im Zuge der weiteren hartverdrahteten Sicherheitsschleife 31 ist zumindest ein weiterer Kontakt 32 angeordnet, der unter Einwirkung einer Traktionssperranforderung TSA geöffnet wird. An Anschlusspunkten 31a der hartverdrahteten Sicherheitsschleife 31 zweigen weitere zu den Stromrichtercontainern 14 geführte elektrische Steuerleitungen 33 ab, von denen hier der Übersichtlichkeit halber ebenfalls jeweils nur einige bezeichnet sind.

Die hartverdrahtete Sicherheitsschleife 21 dient zur Bereitstellung eines Schnellbremssignals SBS in Form einer elektrischen Spannung, deren Wert anzeigt, ob eine Schnellbremsanforderung SBA vorliegt oder nicht vorliegt. Ist die an eine Spannungsquelle angeschlossene Sicherheitsschleife 21 aufgrund einer Schnellbremsanforderung SBA offen, so bildet ein am Anschlusspunkt 21a abgreifbarer 0-Volt Spannungswert einen Schnellbrems-Signalwert SBS.1 - zeigt also an, dass die Schnellbremsanforderung vorliegt. Ist die Sicherheitsschleife 21 geschlossen, so bildet ein am Anschlusspunkt 21a abgreifbarer 110V-Volt Spannungswert einen Signalwert SBS.2, welcher anzeigt, dass keine Schnellbremsanforderung SBA vorliegt.

Die zentrale Zugsteuereinrichtung 8 und die Datenaustauscheinrichtung 9 können ebenfalls Teil der Einrichtung 20 zur Anforderung einer Schnellbremsung sein, da von der zentralen Zugsteuereinrichtung 8 eine Schnellbremsanforderung (also ein Schnellbremsbefehl) SBA' in einen Schnellbrems-Signalwert (also in eine Schnellbremsinformation) SBS.1' umgesetzt und dann über die Datenaustauscheinrichtung 9 bereitgestellt werden kann. Außerdem kann ein Signalwert SBS.2' bereitgestellt werden, welcher anzeigt, dass keine Schnellbremsanforderung SBA' vorliegt.

Wie im Weiteren noch gezeigt, werden sowohl der Schnellbrems-Signalwert SBS.1 als auch der Schnellbrems-Signalwert SBS.1' in einen Traktionsfreigabe-Anforderungssignalwert S1.1 eines Anforderungssignals S1 umgesetzt.

Außerdem können vorzugsweise mittels der zentralen Zugsteuereinrichtung 8 und insbesondere dann, wenn weder eine Schnellbremsanforderung noch eine Traktionssperranforderung aktiviert sind, zu Testzwecken zum Einen eine Traktionsfreigabe-Testanforderung TFTA und zum Anderen eine Traktionssperre-Testanforderung TSTA aktiviert werden. Dabei wird eine aktivierte Traktionsfreigabe-Testanforderung TFTA in einen Traktionsfreigabe-Testsignalwert (also eine Traktionsfreigabe-Testinformation) TS.1 eines Testsignals TS umgesetzt, welcher dann im Weiteren über eine Anforderung zur Traktionsfreigabe ATF auch in den Traktionsfreigabe-Anforderungssignalwert S1.1 umgesetzt wird. Eine aktivierte Traktionssperre-Testanforderung TSTA wird hingegen in einen Traktionssperre-Testsignalwert (also eine Traktionssperre-Testinformation) TS.2 des Testsignals TS umgesetzt. Der Traktionssperre-Testsignalwert TS.2 wird dann über eine Anforderung zur Traktionssperre ATS in einen Traktionssperre-Anforderungssignalwert S1.2 des Anforderungssignals S1 umgesetzt.

Die weitere hartverdrahtete Sicherheitsschleife 31 dient zur Bereitstellung eines weiteren Anforderungssignals S2 in Form einer elektrischen Spannung, deren Wert anzeigt, ob eine Traktionssperranforderung TSA vorliegt oder nicht vorliegt. Ist die an eine Spannungsquelle angeschlossene Sicherheitsschleife 31 aufgrund einer Traktionssperranforderung TSA offen, so bildet ein am Anschlusspunkt 31a abgreifbarer 0-Volt Spannungswert einen weiteren Traktionssperre-Anforderungssignalwert S2.2 - zeigt also an, dass eine Traktionssperranforderung TSA (kurz "Traktionssperre") vorliegt. Ist die Sicherheitsschleife 31 geschlossen, so zeigt ein am Anschlusspunkt 31a abgreifbarer 110-Volt Spannungswert an, dass die Traktionssperranforderung TSA nicht vorliegt. Vielmehr liegt dann invers zur Traktionssperranforderung TSA eine Pulswechselrichterfreigabeanforderung (kurz "PWR-FREIGABE") vor.

Außerdem ist im Weiteren gezeigt, dass ein zusätzliches Anforderungssignal S3 in Form einer elektrischen Spannung bereitgestellt wird, dessen Wert anzeigt, ob eine Traktionsfreigabebedingung TFB oder eine Traktionssperrbedingung TSB vorliegt. Liegt die Traktionsfreigabebedingung TFB vor, so bildet ein 110-Volt Spannungswert einen zusätzlichen Traktionsfreigabe-Anforderungssignalwert S3.1. Liegt die Traktionssperrbebedingung TSB vor, so bildet ein 0-Volt Spannungswert einen zusätzlichen Traktionssperre-Anforderungssignalwert S3.2.

Die beiden Endwagen 4a, 4b und der mit 4c bezeichnete Mittelwagen sind antriebslose Laufwagen. Die Laufwagen weisen jeweils zwei Drehgestelle 5a in Form sogenannter Laufdrehgestelle ohne Antriebseinrichtungen auf. Die zwei mit 4d und 4e bezeichneten Mittelwagen sind Triebwagen, welche in der Praxis auch als Powercars bezeichnet werden. Die Triebwagen 4d, 4e weisen jeweils zwei Drehgestelle 5b in Form sogenannter Triebdrehgestelle auf.

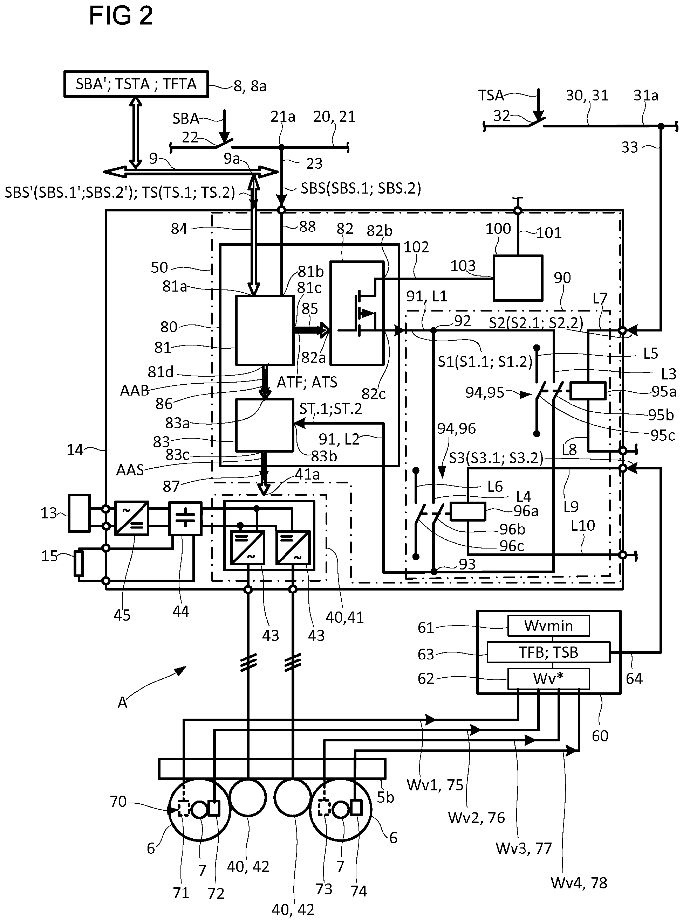

Jedem der Triebdrehgestelle ist jeweils eine Antriebseinrichtung 40 zugeordnet, welche eine Stromrichtereinheit 41 (siehe Figur 2) und zwei Fahrmotoren 42 aufweist.

Zusätzlich zu der Vorrichtung 50, welche zur Steuerung der Antriebseinrichtung 40 des jeweiligen Drehgestells 5b dient, sind dem jeweiligen Drehgestell 5b auch eine Geschwindigkeitserfassungseinrichtung 60 und eine Sensoreinrichtung 70 zugeordnet, so dass jeweils eine der Vorrichtungen 50 zusammen mit einer der Geschwindigkeitserfassungseinrichtungen 60 und einer der Sensoreinrichtungen 70 eine dem jeweiligen Drehgestell 5b zugeordnete und demnach nicht zentrale sondern vielmehr lokale Anordnung A bilden.

Jeder der Fahrmotoren 42 dient im Motorbetrieb zum Antrieb bzw. im Generatorbetrieb zum Abbremsen jeweils einer der endseitig mit Rädern 6 versehenen Radachsen 7 des jeweiligen Triebdrehgestells 5b.

Alternativ hierzu könnte beispielsweise für jede Radachse eines Triebdrehgestells eine separate Antriebseinrichtung mit nur einem Fahrmotor vorgesehen sein.

In der Figur 2 ist von der Antriebseinrichtung 40 neben den Fahrmotoren 42, die Stromrichtereinheit 41 gezeigt, welche in dem Stromrichtercontainer 14 untergebracht ist.

Die Stromrichtereinheit 41 weist zwei Traktionswechselrichter 43 in Form von Pulswechselrichtern auf. Die Traktionswechselrichter 43 sind parallel über einen Gleichspannungszwischenkreis 44 und einen Netzwechselrichter 45 an einen der Transformatoren 13 angeschlossen. Außerdem ist zumindest einer der Bremswiderstände 15, insbesondere über einen hier nicht gezeigten Bremsschopper, an den Gleichspannungszwischenkreis 44 angeschlossen.

Während des Motorbetriebs richtet jeder der beiden Traktionswechselrichter 43 einen Gleichstrom aus dem Gleichspannungszwischenkreis 45 in einen Wechselstrom um, mit dem der an den jeweiligen Traktionswechselrichter 43 angeschlossene Fahrmotor 42 versorgt wird. Während eines elektrischen Bremsvorganges werden die Fahrmotoren 42 als Generatoren betrieben, wobei im Generatorbetrieb über die Traktionswechselrichter 43 elektrische Energie zu dem Bremswiderstand 15 abgeleitet wird. Alternativ hierzu könnte auch eine Konfiguration vorgesehen sein, mittels derer die elektrische Energie im Generatorbetrieb über die Traktionswechselrichter 43 in die Bahnnetzversorgung zurückgespeist wird.

Weiterhin zeigt die Figur 2 einen Abschnitt der einen hartverdrahteten Sicherheitsschleife 21, einen Abschnitt der weiteren hartverdrahteten Sicherheitsschleife 31 sowie einen Abschnitt der Datenaustauscheinrichtung 9 mit dem Zugsteuergerät 8a.

Darüber hinaus zeigt die Figur 2 die in dem Stromrichtercontainer 14 untergebrachte Vorrichtung 50 sowie die Geschwindigkeitserfassungseinrichtung 60 und die Sensoreinrichtung 70.

Die Vorrichtung 50, welche zur Steuerung der zugeordneten Antriebseinrichtung 40 geeignet ausgebildet ist, weist neben einer als Antriebssteuergerät (kurz ASG) ausgebildeten Antriebssteuereinrichtung 80 auch eine Überwachungseinrichtung 90 auf.

Der Stromrichtercontainer 14 weist eine interne Spannungsversorgungseinrichtung 100 auf, welche über eine Leitung 101 an einen hier nicht gezeigten Spannungspol der Energieversorgungseinrichtung 10 des Schienenfahrzeugs 1 angeschlossen ist. An dem Spannungspol der Energieversorgungseinrichtung 10 sind beispielsweise +110V bereitgestellt.

Von der Geschwindigkeitserfassungseinrichtung 60 sind eine Speichereinheit 61, eine Auswerteeinheit 62 und eine Vergleichseinheit 63 gezeigt.

In der Speichereinheit 61 ist ein vorgegebener Minimalwert Wvmin abgespeichert. Alternativ hierzu kann der Minimalwert Wvmin der Geschwindigkeitserfassungseinrichtung 60 auch von einer externen Einrichtung vorgegeben werden. Die Auswerteeinheit 62 ist geeignet ausgebildet, aus mehreren Geschwindigkeitswerten Wv1, Wv2, Wv3, Wv4 einen Geschwindigkeitswert Wv* - beispielsweise in Form eines Mittelwertes der mehreren Geschwindigkeitswerte Wv1, Wv2, Wv3, Wv4 - abzuleiten. In der Vergleichseinheit 63 wird der abgeleitete Geschwindigkeitswert Wv* mit dem vorgegebenen Minimalwert WVmin verglichen.

Anhand des Ergebnisses des Vergleichs bildet die Geschwindigkeitserfassungseinrichtung 60 das zusätzliche Anforderungssignal S3, welches dann über eine zusätzliche Steuerleitung 64 auf die Überwachungseinrichtung 90 einwirkt.

Von der Sensoreinrichtung 70 sind vier Sensoren 71 bis 74 gezeigt, von denen jeder in der Nähe eines Rades 6 des Drehgestells 5b an der jeweiligen Radachse 7 einen der Geschwindigkeitswerte Wv1, Wv2, Wv3 bzw. Wv4 des Fahrzeugs ermittelt. Die gemessenen Geschwindigkeitswerte Wv1, Wv2, Wv3, Wv4 werden über Verbindungsleitungen 75, 76, 77, 78 an die Auswerteeinheit 62 der Geschwindigkeitserfassungseinrichtung 60 übermittelt.

Von der Antriebssteuereinrichtung 80 sind eine Steuereinheit 81, eine als Hardwareoutput (kurz "HW-Output" oder "HW-Out") ausgebildete Ausgabeeinheit 82 und eine Ansteuerkontrolleinheit 83, sowie vier als Busabschnitte ausgebildete Signalpfade 84 bis 87 und ein fünfter als elektrischer Leitungsabschnitt ausgebildeter Signalpfad 88 gezeigt.

Mittels eines ersten Signalpfades 84 der Signalpfade ist ein erster Eingang 81a der Steuereinheit 81 mit einem Anschlusspunkt 9a der Datenaustauscheinrichtung 9 verbunden. Außerdem ist ein zweiter Eingang 81b der Steuereinheit 81 mittels des elektrischen Leitungsabschnittes 88 mit dem vom Anschlusspunkt 21a abzweigenden Leitungsabschnitt verbunden.

Mittels eines zweiten Signalpfades 85 der Signalpfade ist ein erster Eingang 82a der Ausgabeeinheit 82 mit einem ersten Ausgang 81c der Steuereinheit 81 verbunden. Außerdem ist ein zweiter Eingang 82b der der Ausgabeeinheit 82 mittels einer elektrischen Leitung 102 mit einem Spannungspol 103 der internen Spannungsversorgungseinrichtung 100 verbunden. An dem Spannungspol 103 sind beispielsweise +110V bereitgestellt.

Über einen dritten Signalpfad 86 der Signalpfade ist ein erster Eingang 83a der Ansteuerkontrolleinheit 83 mit einem zweiten Ausgang 81d der Steuereinheit 81 verbunden.

Und über den vierten Signalpfad 87 ist ein erster Eingang 41a der Stromrichtereinheit 41 mit einem Ausgang 83c der Ansteuerkontrolleinheit 83 verbunden.

Die Überwachungseinrichtung 90 ist als eine Hardwareeinrichtung in Form einer elektrischen Schaltung mit Leitungsabschnitten L1 bis L10 ausgebildet.

Die Überwachungseinrichtung 90 weist mit den Leitungsabschnitten L1 und L2 einen elektrischen Steuersignalpfad 91 auf, im Zuge dessen zwischen Anschlusspunkten 92, 93 eine Schalteinrichtung 94 angeordnet ist.

Der eine Abschnitt L1 des elektrischen Steuersignalpfades 91 verbindet einen Ausgang 82c der Ausgabeeinheit 82 mit dem einen Anschlusspunkt 92 und der weitere Abschnitt L2 des elektrischen Steuersignalpfades 91 verbindet einen zweiten Eingang 83b der Ansteuerkontrolleinheit 83 mit dem weiteren Anschlusspunkt 92. Der Ausgang 82c ist im Weiteren auch als Kontrollausgang der Antriebssteuereinrichtung 80 bezeichnet und der Eingang 83b ist im Weiteren auch als Kontrolleingang der Antriebssteuereinrichtung 80 bezeichnet.

Die Schalteinrichtung 94 weist zwei parallel geschaltete Schalteinheiten 95, 96 auf. Die beiden Schalteinheiten 95, 96 weisen jeweils einen Aktuator 95a bzw. 96a sowie jeweils zwei von dem Aktuator betätigbare Schaltkontakte 95b, 95c bzw. 96b, 96c auf.

Ein erster 95b der Kontakte der einen Schalteinheit 95 ist im Zuge des mit den beiden Anschlusspunkten 92, 93 verbundenen Leitungsabschnittes L3 angeordnet. Ein erster 96b der Kontakte der anderen Schalteinheit 96 ist im Zuge des mit den beiden Anschlusspunkten 92, 93 verbundenen Leitungsabschnittes L4 angeordnet. Der zweite Kontakt 95c der einen Schalteinheit 95 ist im Zuge des Leitungsabschnittes L5 angeordnet, an dessen Enden ein erstes Meldesignal abgegriffen werden kann. Und der zweite Kontakt 96c der anderen Schalteinheit 96 ist im Zuge des Leitungsabschnittes L6 angeordnet, an dessen Enden ein zweites Meldesignal abgegriffen werden kann.

Der mit 95a bezeichnete Aktuator ist zum Einen über den Leitungsabschnitt L7 mit der vom Anschlusspunkt 31a abzweigenden weiteren Steuerleitung 33 und zum Anderen über den Leitungsabschnitt L8 mit einem hier nicht gezeigten Massepol verbunden.

Der mit 96a bezeichnete Aktuator ist zum Einen über den Leitungsabschnitt L9 mit der zusätzlichen Steuerleitung 64 und zum Anderen über den Leitungsabschnitt L10 mit einem hier ebenfalls nicht gezeigten weiteren Massepol verbunden.

Die erfindungsgemäße Vorrichtung arbeitet in der folgenden Weise:
Die Steuereinheit 81 gibt unter der Einwirkung des Schnellbrems-Signalwertes SBS.1; SBS.1', welcher aufgrund der Schnellbremsanforderung SBA; SBA' an der Steuereinheit 81 anliegt, an die Ausgabeeinheit 82 der Antriebssteuereinrichtung 80 die Anforderung zur Trakionsfreigabe ATF aus.

Die Ausgabeeinheit 82 setzt die Anforderung zur Trakionsfreigabe ATF in den Traktionsfreigabe-Anforderungssignalwert S1.1 um und gibt diesen an ihrem Kontrollausgang 82c aus. Die Antriebssteuereinrichtung 80 stellt also der Überwachungseinrichtung 90 den Traktionsfreigabe-Anforderungssignalwert S1.1 bereit.

Die hartverdrahtete Sicherheitsschleife 31 stellt den weiteren Traktionssperre-Anforderungssignalwert S2.2 bereit, wenn sie aufgrund der Traktionssperranforderung TSA unterbrochen wurde. Die hartverdrahtete Sicherheitsschleife 31 stellt anstelle des weiteren Traktionssperre-Anforderungssignalwertes S2.2 einen weiteren Traktionsfreigabe-Anforderungssignalwert S2.1 bereit, wenn sie geschlossen wurde.

Die Geschwindigkeitserfassungseinrichtung 60 stellt den zusätzlichen Traktionsfreigabe-Anforderungssignalwert S3.1 bereit, wenn ein aus den erfassten Geschwindigkeitswerten Wv1, Wv2, Wv3, Wv4 abgeleiteter Geschwindigkeitswert Wv* des Fahrzeuges 1 größer als ein vorgegebener Mindestgeschwindigkeitswert Wvmin ist. So können beispielsweise der höchste und der niedrigste der vier erfassten Geschwindigkeitswerte Wv1, Wv2, Wv3, Wv4 ignoriert und der abgeleitete Geschwindigkeitswert Wv* als Mittelwert der beiden anderen der vier erfassten Geschwindigkeitswerte Wv1, Wv2, Wv3, Wv4 bereitgestellt werden.

Die Geschwindigkeitserfassungseinrichtung 60 stellt anstelle des zusätzlichen Traktionsfreigabe-Anforderungssignalwertes S3.1 den zusätzlichen Traktionssperre-Anforderungssignalwert S3.2 bereit, wenn der abgeleitete Geschwindigkeitswert Wv* des Fahrzeugs 1 kleiner als oder gleich dem vorgegebenen Mindestgeschwindigkeitswert Wvmin ist.

Alternativ hierzu könnte die Geschwindigkeitserfassungseinrichtung so ausgebildet werden, dass sie den zusätzlichen Traktionssperre-Anforderungssignalwert S3.2 bereitstellt, wenn jeder der erfassten Geschwindigkeitswerte Wv1, Wv2, Wv3, Wv4 kleiner als oder gleich dem vorgegebenen Mindestgeschwindigkeitswert Wvmin ist.

Die Sensoreinrichtung 70 oder die Geschwindigkeitserfassungseinrichtung 60 bildet die Geschwindigkeitswerte Wv1; Wv2; Wv3; Wv4 anhand von Messsignalen, welche von der Sensoreinrichtung 70 an einem mit der Antriebseinrichtung 40 versehenen Drehgestell 5b detektiert werden.

Die Steuereinheit 81 der Antriebssteuereinrichtung 80 gibt unter Einwirkung eines hier nicht gezeigten Steuerbefehls der zentralen Zugsteuereinrichtung 8 an die Ansteuerkontrolleinheit 83 der Antriebssteuereinrichtung 80 einen Antriebsansteuerbefehl AAB aus, welchen die Ansteuerkontrolleinheit 83 in ein Antriebsansteuersignal AAS umsetzt.

Die Ansteuerkontrolleinheit 83 gibt die Ausgabe des Antriebsansteuersignals AAS frei, wenn an ihren Kontrolleingang 83b der Traktionsfreigabe-Steuersignalwert ST.1 anliegt. Die Ansteuerkontrolleinheit 83 sperrt die Ausgabe des Antriebsansteuersignals AAS, wenn an ihren Kontrolleingang 83b anstelle des Traktionsfreigabe-Steuersignalwertes ST.1 der Traktionssperre-Steuersignalwert ST.2 anliegt.

Hierzu wirkt in der Ansteuerkontrolleinheit 83 beispielsweise eine nicht weiter gezeigte Wechselrichtersperre auf Ausgangstreiber. Liegt der Traktionsfreigabe-Steuersignalwert ST.1 an dem Kontrolleingang 83b an, so schaltet die Wechselrichtersperre die Ausgabe von Impulsen zur Ansteuerung der beiden Traktionswechselrichter 43 der Stromrichtereinheit 41, welche das Antriebsansteuersignal AAS bilden, frei. Liegt der Traktionssperre-Steuersignalwert ST.2 an dem Kontrolleingang 83b an, so schaltet die Wechselrichtersperre die Ausgabe der Impulse zur Ansteuerung der beiden Traktionswechselrichter 43 der Stromrichtereinheit 41 ab.

Die Überwachungseinrichtung 90 stellt der Antriebssteuereinrichtung 80 den Traktionsfreigabe-Steuersignalwert ST.1 bereit, unter Einwirkung dessen die Antriebssteuereinrichtung 80 für ein Ansteuern der Antriebseinrichtung 40 freigegeben ist, wenn neben dem Traktionsfreigabe-Anforderungssignalwert S1.1 aufgrund der Schnellbremsanforderung SBA und dem weiteren Traktionssperre-Anforderungssignalwert S2.2 aufgrund der Traktionssperranforderung TSA auch der zusätzliche Traktionsfreigabe-Anforderungssignalwert S3.1 aufgrund der Traktionsfreigabebedingung TFB auf die Überwachungseinrichtung 90 einwirkt.

Hierzu wird an dem Steuersignalpfad 91 der Überwachungseinrichtung 90 aufgrund der Schnellbremsanforderung SBA der Traktionsfreigabe-Anforderungssignalwert S1.1 angelegt. Dabei wird der Steuersignalpfad 91 durch die Schalteinrichtung 94 für eine Signalübertragung freigegeben, wenn zum Einen die eine Schalteinheit 95 unter der Einwirkung des weiteren Traktionssperre-Anforderungssignalwertes S2.2 aufgrund der Traktionssperranforderung TSA offen gehalten wird und zum Anderen die andere Schalteinheit 96 unter der Einwirkung des zusätzlichen Traktionsfreigabe-Anforderungssignalwertes S3.1 aufgrund der Traktionsfreigabebedingung TFB geschlossen gehalten wird.

Damit stellt die Überwachungseinrichtung 90 den Traktionsfreigabe-Anforderungssignalwert S1.1 als den Traktionsfreigabe-Steuersignalwert ST.1 bereit.

Die Überwachungseinrichtung 90 stellt der Antriebssteuereinrichtung 80 anstelle des Traktionsfreigabe-Steuersignalwertes ST.1 den Traktionssperre-Steuersignalwert ST.2 bereit, unter Einwirkung dessen die Antriebssteuereinrichtung 80 für das Ansteuern der Antriebseinrichtung 40 gesperrt ist, wenn neben dem Traktionsfreigabe-Anforderungssignalwert S1.1 aufgrund der Schnellbremsanforderung SBA und dem weiteren Traktionssperre-Anforderungssignalwert S2.2 aufgrund der Traktionssperranforderung TSA anstelle des zusätzlichen Traktionsfreigabe-Anforderungssignalwertes S3.1 der zusätzliche Traktionssperre-Anforderungssignalwert S3.2 aufgrund der Traktionssperrbedingung TSB auf die Überwachungseinrichtung 90 einwirkt.

Hierzu wird der Steuersignalpfad 91 durch die Schalteinrichtung 94 für die Signalübertragung gesperrt, wenn zum Einen die eine Schalteinheit 95 unter der Einwirkung des weiteren Traktionssperre-Anforderungssignalwertes S2.2 aufgrund der Traktionssperranforderung TSA offen gehalten wird und zum Anderen die andere Schalteinheit 96 unter der Einwirkung des zusätzlichen Traktionssperre-Anforderungssignalwertes S3.2 aufgrund der Traktionssperrbedingung TSB ebenfalls offen gehalten wird.

Die Antriebssteuereinrichtung 80 kann der Überwachungseinrichtung 90 den Anforderungssignalwert S1.1 auch in anderen Fällen, beispielsweise dann, wenn das Fahrzeug angetrieben werden soll, bereitstellen.

Außerdem kann die Antriebssteuereinrichtung 80 der Überwachungseinrichtung 90 anstelle des Traktionsfreigabe-Anforderungssignalwertes S1.1 den Traktionssperre-Anforderungssignalwert S1.2 aufgrund der Traktionssperre-Testanforderung TSTA bereitstellen, sofern der Schnellbrems-Signalwert SBS.1; SBS.1' nicht anliegt.

Erfindungsgemäß wird somit durch die Traktionsfreigabebedingung "Wv*>Wvmin" ein hardwaremäßiges Umschalten von der Traktionssperranforderung TFA auf die Schnellbremsanforderung SBA, SBA' vorgenommen. Andererseits wird durch die Traktionssperrbedingung "Wv*≤Wvmin" ein hardwaremäßiges Umschalten von der Schnellbremsanforderung SBA, SBA' auf die Traktionssperranforderung TFA vorgenommen, wobei dieses Umschalten insbesondere erfolgt, wenn sich das Fahrzeug 1 nahezu im Stillstand (Wvmin>0), oder alternativ im Stillstand (Wvmin=0) befindet, erfolgt.

Mittels der Steuereinheit 81 kann über HW-Out das Abschalten der Ausgangstreiber der Ansteuerkontrolleinheit 83 insbesondere auch dann getestet werden, wenn beide Schalteinheiten 95 und 96 geschlossen sind. Darüber hinaus kann, wenn zumindest eine der beiden Schalteinheiten 95, 96 geschlossen ist, auch das Freischalten der Ausgangstreiber getestet werden. Hierzu kann mittels der zentralen Zugsteuereinrichtung 8 die Traktionsfreigabe-Testanforderung TFTA aktiviert und in den Traktionsfreigabe-Testsignalwert (also die Traktionsfreigabe-Testinformation) TS.1 umgesetzt werden. Der Traktionsfreigabe-Testsignalwert TS.1 wird dann in den Traktionsfreigabe-Anforderungssignalwert S1.1 des Anforderungssignals S1 umgesetzt, unter Einwirkung dessen die Ausgabe des Antriebsansteuersignals AAS freigegeben ist.

Ein besonderes Merkmal der gezeigten Ausführungsform der erfindungsgemäßen Vorrichtung ist, dass der Traktionsfreigabe-Anforderungssignalwert S3.1 aufgrund der Traktionsfreigabebedingung TFB (Wv*>Wvmin) nicht zentral auf dem Fahrzeug aus einer zentral gemessenen Fahrzeuggeschwindigkeit erzeugt wird, sondern lokal durch die jeweilige Geschwindigkeitserfassungseinrichtung 60 in der Nähe der jeweiligen elektrischen Antriebseinrichtung 40.

Sollte ein Fehler in der Geschwindigkeitserfassung auftreten, wirkt sich bei dieser Ausgestaltung der Fehler nur lokal aus. Unter Umständen könnte es aufgrund eines Fehlers der Geschwindigkeitserfassung während einer Schnellbremsung dazu kommen, dass das Ansteuern einer der Antriebseinrichtung 40 - also das Wirken einer der Anordnungen A gesperrt wird, während die anderen Anordnungen A des Fahrzeugs 1 weiterhin fehlerfrei arbeiten und somit die Schnellbremsanforderung umsetzen. Die Bremswirkung des Fahrzeugs wäre dann zwar vermindert, aber durch das Wirken der übrigen Anordnungen A - also aufgrund der Redundanz der Anordnungen A - weiterhin gegeben.

Mit der erfindungsgemäßen Vorrichtung ist es nun möglich den elektrischen Antrieb an der Schnellbremse mitwirken zu lassen, ohne dass er aufgrund eines Öffnens der Sicherheitsschleife 31 abgeschaltet werden kann. Durch die Redundanz der Anordnungen A, insbesondere auch der Signalerzeugung zur Stillstandserkennung, ist der Einfluss einzelner Fehler auf die Bremswirkung des Fahrzeugs 1 minimiert und somit eine höhere Sicherheit erreicht. Im Stillstand des Fahrzeugs 1 ist weiterhin eine ungewollte Bewegung verhindert.

## Patentansprüche

1. Vorrichtung (50), welche zur Steuerung einer Antriebseinrichtung (40) zur Traktion eines Fahrzeugs (1) geeignet ausgebildet ist und welche eine Antriebssteuereinrichtung (80) sowie eine Überwachungseinrichtung (90) aufweist, wobei die Überwachungseinrichtung (90) jeweils entweder einen Traktionsfreigabe-Steuersignalwert (ST.1) oder einen Traktionssperre-Steuersignalwert (ST.2) bereitstellt,
**dadurch gekennzeichnet, dass**
die Überwachungseinrichtung (90) geeignet ausgebildet ist, der Antriebssteuereinrichtung (80) den Traktionsfreigabe-Steuersignalwert (ST.1) bereitzustellen, unter Einwirkung dessen die Antriebssteuereinrichtung (80) für ein Ansteuern der Antriebseinrichtung (40) freigegeben ist, wenn neben einem Traktionsfreigabe-Anforderungssignalwert (S1.1) aufgrund einer Schnellbremsanforderung (SBA; SBA') und einem weiteren Traktionssperre-Anforderungssignalwert (S2.2) aufgrund einer Traktionssperranforderung (TSA) auch ein zusätzlicher Traktionsfreigabe-Anforderungssignalwert (S3.1) aufgrund einer Traktionsfreigabebedingung (TFB) auf die Überwachungseinrichtung (90) einwirkt.

2. Vorrichtung (50) nach Anspruch 1,
**dadurch gekennzeichnet, dass**
die Überwachungseinrichtung (90) geeignet ausgebildet ist, der Antriebssteuereinrichtung (80) anstelle des Traktionsfreigabe-Steuersignalwertes (ST.1) den Traktionssperre-Steuersignalwert (ST.2) bereitzustellen, unter Einwirkung dessen die Antriebssteuereinrichtung (80) für das Ansteuern der Antriebseinrichtung (40) gesperrt ist, wenn neben dem Traktionsfreigabe-Anforderungssignalwert (S1.1) aufgrund der Schnellbremsanforderung (SBA; SBA') und dem weiteren Traktionssperre-Anforderungssignalwert (S2.2) aufgrund der Traktionssperranforderung (TSA) anstelle des zusätzlichen Traktionsfreigabe-Anforderungssignalwertes (S3.1) ein zusätzlicher Traktionssperre-Anforderungssignalwert (S3.2) aufgrund einer Traktionssperrbedingung (TSB) auf die Überwachungseinrichtung (90) einwirkt.

3. Vorrichtung (50) nach einem der Ansprüche 1 oder 2,
**dadurch gekennzeichnet, dass**
die Überwachungseinrichtung (90) geeignet ausgebildet ist, den Traktionsfreigabe-Anforderungssignalwert (S1.1) als den Traktionsfreigabe-Steuersignalwert (ST.1) bereitzustellen.

4. Vorrichtung (50) nach einem der Ansprüche 1 bis 3,
**dadurch gekennzeichnet, dass**
die Antriebssteuereinrichtung (80) geeignet ausgebildet ist, der Überwachungseinrichtung (90) unter der Einwirkung eines Schnellbrems-Signalwertes (SBS.l; SBS.1'), welcher aufgrund der Schnellbremsanforderung (SBA; SBA') an der Antriebssteuereinrichtung (80) anliegt, den Traktionsfreigabe-Anforderungssignalwert (S1.1) bereitzustellen.

5. Vorrichtung (50) nach Anspruch 4,
**dadurch gekennzeichnet, dass**
die Antriebssteuereinrichtung (80) geeignet ausgebildet ist, der Überwachungseinrichtung (90) anstelle des Traktionsfreigabe-Anforderungssignalwertes (S1.1) einen Traktionssperre-Anforderungssignalwert (S1.2) aufgrund einer Traktionssperre-Testanforderung (TSTA) bereitzustellen, sofern der Schnellbrems-Signalwert (SBS.l; SBS.1') nicht anliegt.

6. Vorrichtung (50) nach einem der Ansprüche 1 bis 5,
**dadurch gekennzeichnet, dass**
die Überwachungseinrichtung (90) als eine Hardwareeinrichtung, insbesondere in Form einer elektrischen Schaltung, ausgebildet ist.

7. Vorrichtung (50) nach einem der Ansprüche 1 bis 6,
**dadurch gekennzeichnet, dass**
die Überwachungseinrichtung (90) einen Steuersignalpfad (91) aufweist, an dem aufgrund der Schnellbremsanforderung (SBA; SBA') der Traktionsfreigabe-Anforderungssignalwert (S1.1) anliegt und im Zuge dessen eine Schalteinrichtung (94) angeordnet ist, welche zwei parallel geschaltete Schalteinheiten (95, 96) aufweist,
wobei der Steuersignalpfad (91) durch die Schalteinrichtung (94) für eine Signalübertragung freigegeben ist, wenn zum Einen die eine Schalteinheit (95) unter der Einwirkung des weiteren Traktionssperre-Anforderungssignalwertes (S2.2) aufgrund der Traktionssperranforderung (TSA) offen gehalten ist und zum Anderen die andere Schalteinheit (96) unter der Einwirkung des zusätzlichen Traktionsfreigabe-Anforderungssignalwertes (S3.1) aufgrund der Traktionsfreigabebedingung (TFB) geschlossen gehalten ist.

8. Vorrichtung (50) nach Anspruch 7,
**dadurch gekennzeichnet, dass**
der Steuersignalpfad (91) durch die Schalteinrichtung (94) für die Signalübertragung gesperrt ist, wenn zum Einen die eine Schalteinheit (95) unter der Einwirkung des weiteren Traktionssperre-Anforderungssignalwertes (S2.2) aufgrund der Traktionssperranforderung (TSA) offen gehalten ist und zum Anderen die andere Schalteinheit (96) unter der Einwirkung des zusätzliche Traktionssperre-Anforderungssignalwertes (S3.2) aufgrund der Traktionssperrbedingung (TSB) offen gehalten ist.

9. Vorrichtung (50) nach einem der Ansprüche 1 bis 8,
**dadurch gekennzeichnet, dass**
die Antriebssteuereinrichtung (80) eine Steuereinheit (81), eine Ausgabeeinheit (82), welche einen Kontrollausgang (82c) bildet, und eine Ansteuerkontrolleinheit (83), welche einen Kontrolleingang (83b) bildet, aufweist,
- wobei die Steuereinheit (81) geeignet ausgebildet ist, an die Ansteuerkontrolleinheit (83) einen Antriebsansteuerbefehl (AAB) auszugeben, welchen die Ansteuerkontrolleinheit (83) in ein Antriebsansteuersignal (AAS) umsetzt,
- wobei die Steuereinheit (81) geeignet ausgebildet ist, unter der Einwirkung eines Schnellbrems-Signalwertes (SBS.l; SBS.1'), welcher aufgrund der Schnellbremsanforderung (SBA; SBA') an der Steuereinheit (81) anliegt, an die Ausgabeeinheit (82) eine Anforderung zur Traktionsfreigabe (ATF) auszugeben, welche die Ausgabeeinheit (82) in den Traktionsfreigabe-Anforderungssignalwert (S1.1) umsetzt und an ihrem Kontrollausgang (82c) ausgibt, und
- wobei die Ansteuerkontrolleinheit (83) geeignet ausgebildet ist, die Ausgabe des Antriebsansteuersignals (AAS) freizugeben, wenn an ihren Kontrolleingang (83b) der Traktionsfreigabe-Steuersignalwert (ST.1) anliegt, und die Ausgabe des Antriebsansteuersignals (AAS) zu sperren, wenn an ihren Kontrolleingang (83b) anstelle des Traktionsfreigabe-Steuersignalwertes (ST.1) der Traktionssperre-Steuersignalwert (ST.2) anliegt.

10. Fahrzeug (1), insbesondere Schienenfahrzeug, mit zumindest einer Antriebseinrichtung (40) zur Traktion des Fahrzeugs (1) und mit einer Vorrichtung (50) zur Steuerung der zumindest einen Antriebseinrichtung (40),
**dadurch gekennzeichnet, dass** die Vorrichtung (50) nach einem der Ansprüche 1 bis 9 ausgebildet ist.

11. Fahrzeug (1) nach Anspruch 10,
**gekennzeichnet, durch**
eine hartverdrahtete Sicherheitsschleife (31), welche geeignet ausgebildet ist, der Überwachungseinrichtung (90) den weiteren Traktionssperre-Anforderungssignalwert (S2.2) bereitzustellen, wenn sie aufgrund der Traktionssperranforderung (TSA) unterbrochen ist, und anstelle des weiteren Traktionssperre-Anforderungssignalwertes (S2.2) einen weiteren Traktionsfreigabe-Anforderungssignalwert (S2.1) bereitzustellen, wenn sie geschlossen ist.

12. Fahrzeug (1) nach einem der Ansprüche 10 oder 11,
**gekennzeichnet, durch**
eine Geschwindigkeitserfassungseinrichtung (60), welche geeignet ausgebildet ist, den zusätzliche Traktionsfreigabe-Anforderungssignalwert (S3.1) bereitzustellen, wenn zumindest ein erfasster Geschwindigkeitswert (Wvl; Wv2; Wv3; Wv4) oder ein aus zumindest einem der erfassten Geschwindigkeitswerte (Wvl, Wv2, Wv3, Wv4) abgeleiteter Geschwindigkeitswert (Wv*) des Fahrzeuges (1) größer als ein vorgegebener Mindestgeschwindigkeitswert (Wvmin) ist, und anstelle des zusätzlichen Traktionsfreigabe-Anforderungssignalwertes (S3.1) den zusätzlichen Traktionssperre-Anforderungssignalwert (S3.2) bereitzustellen, wenn jeder der erfassten Geschwindigkeitswerte (Wvl, Wv2, Wv3, Wv4) beziehungsweise der abgeleitete Geschwindigkeitswert (Wv*) des Fahrzeugs (1) kleiner als oder gleich dem vorgegebenen Mindestgeschwindigkeitswert (Wvmin) ist.

13. Fahrzeug (1) nach Anspruch 12,
**gekennzeichnet, durch**
eine Sensoreinrichtung (70), wobei die Sensoreinrichtung (70) oder die Geschwindigkeitserfassungseinrichtung (60) geeignet ausgebildet ist, den zumindest einen Geschwindigkeitswert (Wvl; Wv2; Wv3; Wv4) anhand von Messsignalen zu bilden, welche von der Sensoreinrichtung (70) an einem mit der Antriebseinrichtung (40) versehenen Drehgestell (5b) detektiert werden.

14. Verfahren zur Steuerung einer Antriebseinrichtung (40) zur Traktion eines Fahrzeugs (1), bei dem eine Überwachungseinrichtung (90) jeweils entweder einen Traktionsfreigabe-Steuersignalwert (ST.1) oder einen Traktionssperre-Steuersignalwert (ST.2) bereitstellt,
**dadurch gekennzeichnet, dass**
die Überwachungseinrichtung (90) einer Antriebssteuereinrichtung (80) den Traktionsfreigabe-Steuersignalwert (ST.1) bereitstellt, unter Einwirkung dessen die Antriebssteuereinrichtung (80) für ein Ansteuern der Antriebseinrichtung (40) freigegeben ist, wenn neben einem Traktionsfreigabe-Anforderungssignalwert (S1.1) aufgrund einer Schnellbremsanforderung (SBA) und einem weiteren Traktionssperre-Anforderungssignalwert (S2.2) aufgrund einer Traktionssperranforderung (TSA) auch ein zusätzlicher Traktionsfreigabe-Anforderungssignalwert (S3.1) aufgrund einer Traktionsfreigabebedingung (TFB) auf die Überwachungseinrichtung (90) einwirkt.

15. Verfahren nach Anspruch 14,
**dadurch gekennzeichnet, dass**
die Überwachungseinrichtung (90) der Antriebssteuereinrichtung (80) anstelle des Traktionsfreigabe-Steuersignalwertes (ST.1) den Traktionssperre-Steuersignalwert (ST.2) bereitstellt, unter Einwirkung dessen die Antriebssteuereinrichtung (80) für das Ansteuern der Antriebseinrichtung (40) gesperrt ist, wenn neben dem Traktionsfreigabe-Anforderungssignalwert (S1.1) aufgrund der Schnellbremsanforderung (SBA) und dem weiteren Traktionssperre-Anforderungssignalwert (S2.2) aufgrund der Traktionssperranforderung (TSA) anstelle des zusätzlichen Traktionsfreigabe-Anforderungssignalwertes (S3.1) ein zusätzlicher Traktionssperre-Anforderungssignalwert (S3.2) aufgrund einer Traktionssperrbedingung (TSB) auf die Überwachungseinrichtung (90) einwirkt.

## Claims

1. Device (50), which is designed to be suitable for controlling a drive apparatus (40) for traction of a vehicle (1), and which has a drive control apparatus (80) and a monitoring apparatus (90), wherein the monitoring apparatus (90) provides either a traction release control signal value (ST.1) or a traction lock control signal value (ST.2) in each case,
**characterised in that**
the monitoring apparatus (90) is designed to be suitable for providing the drive control apparatus (80) with the traction release control signal value (ST.1), under the effect of which the drive control apparatus (80) is released for actuation of the drive apparatus (40) if, in addition to a traction release request signal value (S1.1) due to an emergency braking request (SBA; SBA') and an additional traction lock request signal value (S2.2) due to a traction lock request (TSA), an additional traction release request signal value (S3.1) due to a traction release condition (TFB) acts on the monitoring apparatus (90).

2. Device (50) according to claim 1,
**characterised in that**
the monitoring apparatus (90) is designed to be suitable for providing the drive control apparatus (80) with the traction lock control signal value (ST.2), instead of the traction release control signal value (ST.1), under the effect of which the drive control apparatus (80) is locked for actuation of the drive apparatus (40) if, in addition to the traction release request signal value (S1.1) due to the emergency braking request (SBA; SBA') and the additional traction lock request signal value (S2.2) due to the traction lock request (TSA) an additional traction lock request signal value (S3.2) due to a traction lock condition (TSB) acts on the monitoring apparatus (90) instead of the additional traction release request signal value (S3.1).

3. Device (50) according to one of claims 1 or 2,
**characterised in that**
the monitoring apparatus (90) is designed to be suitable for providing the traction release request signal value (S1.1) as the traction release control signal value (ST.1).

4. Device (50) according to one of claims 1 to 3,
**characterised in that**
the drive control apparatus (80) is designed to be suitable for providing the monitoring apparatus (90) under the effect of an emergency braking signal value (SBS.1; SBS.1'), which is present at the drive control apparatus (80) due to the emergency braking request (SBA; SBA'), with the traction release request signal value (S1.1).

5. Device (50) according to claim 4,
**characterised in that**
the drive control apparatus (80) is designed to be suitable for providing the monitoring apparatus (90) with a traction lock request signal value (S1.2) due to a traction lock test request (TSTA), instead of the traction release request signal value (S1.1), if the emergency braking signal value (SBS.1; SBS.1') is not present.

6. Device (50) according to one of claims 1 to 5,
**characterised in that**
the monitoring apparatus (90) is designed as a hardware apparatus, in particular in the form of an electrical circuit.

7. Device (50) according to one of claims 1 to 6,
**characterised in that**
the monitoring apparatus (90) has a control signal path (91), at which the traction release request signal value (S1.1) is present due to the emergency braking request (SBA; SBA') and in the course of which a switching apparatus (94) is arranged, which has two switching units (95, 96) connected in parallel, wherein the control signal path (91) is released by the switching apparatus (94) for signal transmission if, on the one hand, the one switching unit (95) is kept open under the effect of the additional traction lock request signal value (S2.2) due to the traction lock request (TSA) and, on the other hand, the other switching unit (96) is kept closed under the effect of the additional traction release request signal value (S3.1) due to the traction release condition (TFB).

8. Device (50) according to claim 7,
**characterised in that**
the control signal path (91) is locked by the switching apparatus (94) for signal transmission if, on the one hand, the one switching unit (95) is kept open under the effect of the additional traction lock request signal value (S2.2) due to the traction lock request (TSA) and, on the other hand, the other switch unit (96) is kept open under the effect of the additional traction lock request signal value (S3.2) due to the traction lock condition (TSB).

9. Device (50) according to one of claims 1 to 8,
**characterised in that**
the drive control apparatus (80) has a control unit (81), an output unit (82) which forms a control output (82c), and an actuation control unit (83) which forms a control input (83b),
- wherein the control unit (81) is designed to be suitable for outputting a drive control command (AAB) to the actuation control unit (83), which the actuation control unit (83) converts into a drive control signal (AAS),
- wherein the control unit (81) is designed to be suitable for outputting, under the effect of an emergency braking signal value (SBS.1; SBS.1'), which is present at the control unit (81) due to the emergency braking request (SBA; SBA'), a request for traction release (ATF) to the output unit (82), which the output unit (82) converts into the traction release request signal value (S1.1) and outputs it at its control output (82c), and
- wherein the actuation control unit (83) is designed to be suitable for releasing the output of the drive control signal (AAS) when the traction release control signal value (ST.1) is present at its control input (83b), and to block the output of the drive control signal (AAS) when the traction lock control signal value (ST.2) is present at its control input (83b) instead of the traction release control signal value (ST.1).

10. Vehicle (1), in particular a rail vehicle, having at least one drive apparatus (40) for traction of the vehicle (1) and having a device (50) for controlling the at least one drive apparatus (40),
**characterised in that**
the device (50) is designed according to one of claims 1 to 9.

11. Vehicle (1) according to claim 10,
**characterised by**
a hard-wired safety loop (31), which is designed to be suitable for providing the monitoring apparatus (90) with the additional traction lock request signal value (S2.2) if it is interrupted due to the traction lock request (TSA), and for providing an additional traction release request signal value (S2.1), instead of the additional traction lock request signal value (S2.2), if it is closed.

12. Vehicle (1) according to one of claims 10 or 11,
**characterised by**
a speed detection apparatus (60) which is designed to be suitable for providing the additional traction release request signal value (S3.1) if at least one detected speed value (Wvl; Wv2; Wv3; Wv4) or a speed value (Wv*) of the vehicle (1) derived from at least one of the detected speed values (Wvl, Wv2, Wv3, Wv4) is greater than a predefined minimum speed value (Wvmin), and for providing the additional traction lock request signal value (S3.2), instead of the additional traction release request signal value (S3.1), if each of the detected speed values (Wvl, Wv2, Wv3, Wv4) or the derived speed value (Wv*) of the vehicle (1) is less than or equal to the predefined minimum speed value (Wvmin).

13. Vehicle (1) according to claim 12,
**characterised by**
a sensor device (70), wherein the sensor device (70) or the speed detection apparatus (60) is designed to be suitable for forming the at least one speed value (Wvl; Wv2; Wv3; Wv4) on the basis of measurement signals which are detected by the sensor device (70) on a bogie (5b) provided with the drive apparatus (40).

14. Method for controlling a drive apparatus (40) for traction of a vehicle (1), in which a monitoring apparatus (90) provides either a traction release control signal value (ST.1) or a traction lock control signal value (ST.2) in each case, **characterised in that**
the monitoring apparatus (90) of a drive control apparatus (80) provides the traction release control signal value (ST.1), under the effect of which the drive control apparatus (80) is released for actuation of the drive apparatus (40) if, in addition to a traction release request signal value (S1.1) due to an emergency braking request (SBA) and an additional traction lock request signal value (S2.2) due to a traction lock request (TSA), an additional traction release request signal value (S3.1) due to a traction release condition (TFB) also acts on the monitoring apparatus (90).

15. Method according to claim 14,
**characterised in that**
the monitoring apparatus (90) provides the drive control apparatus (80) with a traction lock control signal value (ST.2), instead of the traction release control signal value (ST.1), under the effect of which the drive control apparatus (80) is locked for actuation of the drive apparatus (40) if, in addition to the traction release request signal value (S1.1) due to the emergency braking request (SBA) and the additional traction lock request signal value (S2.2) due to the traction lock request (TSA), an additional traction lock request signal value (S3.2) due to a traction locking condition (TSB) acts on the monitoring apparatus (90) instead of the additional traction release request signal value (S3.1) .

## Revendications

1. Installation (50) qui est constituée de manière à être propre à commander un dispositif (40) d'entraînement pour la traction d'un véhicule (1) et qui a un dispositif (80) de commande de l'entraînement ainsi qu'un dispositif (90) de contrôle, le dispositif (90) de contrôle donnant respectivement, soit une valeur (ST.1) de signal de commande de validation de la traction, soit une valeur (ST.2) de signal de commande bloquant la traction,
**caractérisé en ce que**
le dispositif (90) de contrôle est constitué de manière propre à mettre à disposition du dispositif (80) de commande de l'entraînement la valeur (ST.1) de signal de commande validant la traction, sous l'effet de laquelle le dispositif (81) de commande de l'entraînement est validé pour une commande d'entraînement si, outre une valeur (S.1) de signal de demande de validation de la traction en raison d'une demande (SBA ; SBA') de freinage rapide et outre une valeur (S.2.2) de signal de demande de blocage de la traction en raison d'une demande (TSA) de blocage de la traction, agit sur le dispositif (90) de contrôle également une valeur (S3.1) supplémentaire de signal de demande de validation de la traction en raison d'une condition (TFB) de validation de la traction.

2. Installation (50) suivant la revendication 1,
**caractérisée en ce que**
le dispositif (90) de contrôle est constitué de manière propre à mettre à disposition du dispositif (80) de commande de l'entraînement la valeur (ST.2) de signal de commande de blocage de la traction, au lieu de la valeur (ST.1) de signal de commande de la validation de la traction, , sous l'effet de laquelle le dispositif (81) de commande de l'entraînement est bloqué pour l'entraînement du dispositif (40) d'entraînement, si agit sur le dispositif (90) de contrôle outre la valeur (S1.1) de signal de demande de validation de la traction en raison de la demande (SBA ; SBA') de freinage rapide et outre l'autre valeur (S2.2) de signal de demande de blocage de la traction en raison de la demande (TSA) de blocage de la traction, au lieu de la valeur (S3.1) supplémentaire de signal de demande de validation de la traction, une valeur (S3.2) supplémentaire de signal de demande de blocage de la traction en raison d'une condition (TSB) de blocage de la traction.

3. Installation (50) suivant l'une des revendications 1 ou 2,
**caractérisée en ce que**
le dispositif (90) de contrôle est constitué de manière propre à mettre à disposition la valeur (S1.1) de signal de demande de validation de la traction comme valeur (ST.1) de signal de commande de la validation de la traction.

4. Installation (50) suivant l'une des revendications 1 à 3,
**caractérisée en ce que**
le dispositif (80) de commande de l'entraînement est constitué de manière propre à mettre la valeur (S1.1) de signal de demande de validation de la traction, à disposition du dispositif (90) de contrôle sous l'effet d'une valeur (SBS.1 ; SBS.1') de signal de freinage rapide, qui s'applique en raison de la demande (SBA ; SBA') de freinage rapide au dispositif (80) de commande de l'entraînement.

5. Installation (50) suivant la revendication 4,
**caractérisée en ce que**
le dispositif (80) de commande de l'entraînement est constitué de manière propre à mettre une valeur (S1.2) de signal de demande de blocage de la traction, en raison d'une demande (TSTA) de test de blocage de la traction à disposition du dispositif (90) de commande, au lieu de la valeur (S1.1) de signal de demande de validation de la traction, dès que la valeur (SBS.1 ; SB1.1') de signal de freinage rapide ne s'applique pas.

6. Installation (50) suivant l'une des revendications 1 à 5,
**caractérisée en ce que**
le dispositif (90) de contrôle est constitué sous la forme d'un dispositif matériel, notamment sous la forme d'un circuit électrique.

7. Installation (50) suivant l'une des revendications 1 à 6,
**caractérisée en ce que**
le dispositif (90) de contrôle a un trajet (91) de signal de commande auquel s'applique en raison de la demande (SBA ; SBA') de freinage rapide la valeur (S1.1) de signal de demande de validation de la traction et sur lequel est monté un dispositif (94) de coupure, qui a deux unités (95, 96) de coupure montées en parallèle,
dans laquelle le trajet (91) de signal de commande est validé par le dispositif (94) de coupure pour une transmission du signal si, d'une part la une unité (95) de coupure est sous l'effet de l'autre valeur (S2.2) de signal de demande de blocage de la traction en raison de la demande (TSA) de blocage de la traction, maintenue ouverte et, d'autre part si l'autre unité (96) de coupure est, sous l'effet de la valeur (S3.1) supplémentaire de signal de demande de validation de la traction en raison de la condition (TFB) de validation de la traction, maintenue fermée.

8. Installation (50) suivant la revendication 7,
**caractérisée en ce que**
le trajet (91) de signal de commande est maintenu bloqué par le dispositif (94) de coupure pour la transmission de signal, si d'une part la une unité (95) de coupure est, sous l'effet de l'autre valeur (S2.2) de signal de demande de blocage de la traction en raison de la demande (TSA) de blocage de la traction, maintenue ouverte et d'autre part, si l'autre unité (96) de coupure est, sous l'effet de la valeur (S3.2) supplémentaire de signal de demande de blocage de la traction en raison de la condition (TSB) de blocage de la traction, maintenue ouverte.

9. Installation (50) suivant l'une des revendications 1 à 8,
**caractérisée en ce que**
le dispositif (80) de commande de l'entraînement a une unité (81) de commande, une unité (82) d'émission, qui forme une sortie (82c) de contrôle et une unité (83) de contrôle de commande, qui forme une entrée (83b) de contrôle,
- dans laquelle l'unité (81) de commande est constituée de manière propre à émettre vers l'unité (83) de contrôle de commande une instruction (AAB) de commande de l'entraînement, que l'unité (83) de contrôle de la commande transforme en un signal (AAS) de commande de l'entraînement,
- dans laquelle l'unité (81) de commande est constituée de manière propre, sous l'effet d'une valeur (SBS.1 ; SBS.1') de signal de freinage rapide, qui s'applique à l'unité (81) de commande en raison de la demande (SBA ; SBA') de freinage rapide, à envoyer à l'unité (81) d'émission une demande de validation (ATF) de la traction, que l'unité (82) d'émission transforme en la valeur (S1.1) de signal de demande de validation de la traction et envoie à sa sortie (82c) de contrôle, et
- dans laquelle l'unité (83) de contrôle de la commande est constituée de manière propre à valider l'envoi du signal (AAS) de commande de l'entraînement, s'il s'applique à son entrée (83b) de contrôle la valeur (ST.1) de signal de commande de la validation de la traction et à bloquer l'envoi du signal (AAS) de commande de l'entraînement, s'il s'applique à son entrée (83b) de contrôle, au lieu de la valeur (ST.1) de signal de commande de validation de la traction, la valeur (ST.2) de signal de commande du blocage de la traction.

10. Véhicule (1), notamment véhicule ferroviaire, comprenant au moins un dispositif (40) d'entraînement pour la traction du véhicule et une installation (50) pour la commande du au moins un dispositif (40) d'entraînement,
**caractérisé en ce que**
l'installation (50) est constituée suivant l'une des revendications 1 à 9.

11. Véhicule (1) suivant la revendication 10,
**caractérisé par**
une boucle (31) de sécurité câblée en matériel, qui est constituée de manière propre à mettre l'autre valeur (S2.2) de signal de demande de blocage de la traction à disposition du dispositif (90) de contrôle, si elle est interrompue en raison de la demande (TSA) de blocage de la traction et à mettre à disposition, au lieu de l'autre valeur (S2.2) de signal de demande de blocage de la traction une autre valeur (S2.1) de signal de demande de validation de la traction, si elle est fermée.

12. Véhicule (1) suivant l'une des revendications 10 ou 11,
**caractérisé par**
un dispositif (60) de détection de la vitesse, qui est constitué de manière propre à mettre à disposition la valeur (S3.1) supplémentaire de signal de demande de validation de la traction, si au moins une valeur (Wv1 ; Wv2 ; Wv3 ; Wv4) de vitesse détectée ou une valeur de vitesse du véhicule (1) déduite des valeurs (Wv1 ; Wv2 ; Wv3 ; Wv4) de vitesse détectées est plus grande qu'une valeur (Wvmin) de vitesse minimum donnée à l'avance et à mettre à disposition, au lieu de la valeur (S3.1) supplémentaire de signal de demande de la validation de la traction, la valeur (S3.2) supplémentaire de signal de demande de blocage de la traction, si chacune des valeurs (Wv1 ; Wv2 ; Wv3 ; Wv4) de vitesse détectée ou la valeur (Wv*) de vitesse déduite du véhicule (1) est inférieure ou égale à la valeur (Wvmin) de vitesse minimum donnée à l'avance.

13. Véhicule (1) suivant la revendication 12,
**caractérisé par**
un dispositif (70) de capteur, le dispositif (70) de capteur ou le dispositif (60) de détection de la vitesse étant constitué de manière propre à former la au moins une valeur (Wv1 ; Wv2 ; Wv3 ; Wv4) de vitesse à l'aide de signaux de mesure, qui sont détectés par le dispositif (70) de capteur sur un boggie (5b) pourvu du dispositif (40) d'entraînement.

14. Procédé de commande d'un dispositif d'entraînement pour la traction d'un véhicule (1), dans lequel un dispositif (90) de contrôle met à disposition respectivement, soit une valeur (ST.1) de signal de commande de validation de la traction, soit une valeur (ST.2) de signal du blocage de la traction,
**caractérisé en ce que**
le dispositif (90) de contrôle met la valeur (ST.1) de signal de commande de validation de la traction à disposition du dispositif (80) de commande de l'entraînement, sous l'effet de laquelle le dispositif (80) de commande de l'entraînement est validé pour une commande du dispositif (40) de l'entraînement, si agit sur le dispositif (90) de contrôle, outre une valeur (S1.1) de signal de demande de validation de la traction en raison d'une demande (SBA) de freinage rapide et outre une autre valeur (S2.2) de signal de demande de blocage de la traction en raison d'une demande (TSA) de blocage de la traction, également une valeur (S3.1) supplémentaire de demande de validation de la traction en raison d'une condition (TFB) de validation de la traction.

15. Procédé suivant la revendication 14,
**caractérisé en ce que**
le dispositif (90) de contrôle du dispositif (80) de commande de l'entraînement met à disposition, au lieu de la valeur (ST.1) de signal de commande de validation de la traction, la valeur (ST.2) de signal de commande du blocage de la traction, sous l'effet de laquelle le dispositif (80) de commande de l'entraînement est bloqué pour l'entraînement du dispositif (40) d'entraînement, si outre la valeur (S1.1) de signal de demande de validation de la traction en raison de la demande (SBA) de freinage rapide et outre l'autre valeur (S2.2) de signal de demande de blocage de la traction en raison de la demande (TSA) de blocage de la traction agit le dispositif (90) de contrôle, au lieu de la valeur (S3.2) supplémentaire de signal de demande de la validation de la traction, une valeur (S3.2) supplémentaire de signal de demande de blocage de la traction en raison d'une condition (TSB) de blocage de la traction.
